# EUROPÄISCHE PATENTANMELDUNG

(11) **EP 4 832 278 A1**
(43) Veröffentlichungstag der Anmeldung: **28.10.2026**
(21) Anmeldenummer: 26168418.7
(22) Anmeldetag: 27.03.2026
(51) Int. Cl.: H02G 9/04, H02G 3/04, H02G 3/38, H02G 9/06

(54) **LEITUNGSFÜHRUNGSMODUL, LEITUNGSFÜHRUNGSMODULANORDNUNG UND LADEVORRICHTUNGSANORDNUNG MIT EINEM LEITUNGSFÜHRUNGSMODUL**

(30) Priorität: 27.03.2025 DE 102025111945
(71) Anmelder: Pierburg GmbH, 41460 Neuss (DE)
(72) Erfinder: STRACKE, Felix, 41460 Neuss (DE); HOFFMANN, Jens, 41460 Neuss (DE)
(74) Vertreter: Bardehle Pagenberg Partnerschaft mbB Patentanwälte Rechtsanwälte

(57) **Zusammenfassung**

Ein erfindungsgemäßes Leitungsführungsmodul (10) zur Führung einer elektrischen Leitung (1) unterhalb eines Gehwegs (4) umfasst eine Auflagefläche (30), die dazu ausgelegt ist, dass ein Bodenbelag (5) des Gehwegs (4) darauf angeordnet werden kann, ein Leitungsführungselement (12) mit, einer Bodenfläche (20), mittels der das Leitungsführungselement (12) auf einem Untergrund (6) platzierbar ist, mehreren Leitungsführungskanälen (40, 42, 44, 46) in dem Leitungsführungselement (12), die sich in einer parallel zur Bodenfläche (20) angeordneten Leitungsführungsebene (P) erstrecken und die in Richtung der Bodenfläche (20) durch jeweils einen Leitungsführungskanalboden (52) begrenzt sind, mehreren Seitenflächen (24), die das Leitungsführungselement (12) in der Leitungsführungsebene (P) begrenzen, wobei jeder Leitungsführungskanal (40, 42, 44, 46) in der Leitungsführungsebene (P) durch Leitungsführungskanalseitenwände (54) begrenzt ist und sich zwischen mindestens zwei Seitenflächen (24) erstreckt. Hierbei können mehrere Leitungsführungsmodule (10) zu einer Leitungsführungsmodulanordnung (100) zusammengeschlossen werden, wobei das Leitungsführungsmodul (10) oder die Leitungsführungsmodulanordnung (100) angrenzend zu einer Ladevorrichtung (150) angeordnet werden können. Mit dem erfindungsgemäßen Leitungsführungsmodul (10) können elektrische Leitungen (1) unmittelbar unterhalb eines Bodenbelags (5) eines Gehwegs (4) platziert werden, ohne dass aufwendige Erdarbeiten durchgeführt werden müssen.

## Beschreibung

Die vorliegende Erfindung betrifft ein Leitungsführungsmodul zur Führung einer elektrischen Leitung unterhalb eines Gehwegs. Ferner betrifft die vorliegende Erfindung eine Leitungsführungsmodulanordnung mit mehreren Leitungsführungsmodulen und eine Ladevorrichtungsanordnung mit einem Leitungsführungsmodul oder einer Leitungsführungsmodulanordnung.

Eine Ladevorrichtung, mittels der eine Traktionsbatterie eines batterieelektrisch antreibbaren Fahrzeugs elektrisch aufgeladen werden kann, ist typischerweise auf oder an einem Gehweg insbesondere an einem straßenseitigen Ende eines Gehwegs angeordnet. Die Stromversorgung der Ladevorrichtung erfolgt hierbei in der Regel über einen Stromverteilerkasten, der typischerweise am anderen Ende des Gehwegs also an der von der Straße entfernten Seite angeordnet ist. Die elektrischen Leitungen zwischen dem Stromverteilerkasten und der Ladevorrichtung verlaufen unterirdisch und werden aus Gründen der Sicherheit in einer Tiefe von ca. 80 cm verlegt. Zur Installation einer neuen Ladevorrichtung, beispielsweise einer Ladesäule, die auf dem Gehweg platziert ist und von diesem emporragt oder einer sogenannten BordsteinLadevorrichtung, die anstelle eines herkömmlichen Bordsteins am straßenseitigen Rand des Gehwegs platziert ist, muss somit der Gehweg bis zur genannten Tiefe ausgeschachtet werden, um die elektrischen Leitungen zu der Ladevorrichtung zu legen. Dieser Vorgang ist relativ aufwendig, und kann zumeist eine tage- oder wochenlange Sperrung des Gehwegs mit sich bringen.

Der vorliegenden Erfindung liegt daher die Aufgabe zugrunde, eine Vorrichtung zur Aufnahme von elektrischen Leitungen unterhalb eines Gehwegs zu schaffen.

Diese Aufgabe wird erfindungsgemäß durch ein Leitungsführungsmodul mit den Merkmalen des Anspruchs 1 gelöst. Ferner wird die Aufgabe erfindungsgemäß durch eine Leitungsführungsmodulanordnung mit den Merkmalen des Anspruchs 13 sowie durch eine Ladevorrichtungsanordnung mit den Merkmalen des Anspruchs 15 gelöst.

Das erfindungsgemäße Leitungsführungsmodul umfasst ein Leitungsführungselement mit einer Bodenfläche, mittels der das Leitungselement auf einem Untergrund platzierbar ist. Das Leitungsführungsmodul wird unmittelbar unterhalb des Bodenbelags eines Gehwegs platziert. Der Bodenbelag eines Gehwegs ist häufig durch Steinplatten gebildet, die auf einem Sand- oder Kiesbett liegen. Das erfindungsgemäße Leitungsführungsmodul ist dazu ausgelegt, unterhalb dieser Steinplatten vorzugsweise auf dem Sand- oder Kiesbett angeordnet zu werden, wobei die Steinplatten dann direkt auf das Leitungsführungsmodul gelegt werden können. Hierzu umfasst das Leitungsführungsmodul eine Auflagefläche, die dazu ausgelegt ist, dass ein Bodenbelag des Gehwegs darauf angeordnet werden kann.

Die Auflagefläche ist vorzugsweise als ebene Fläche ausgebildet, sodass der Bodenbelag des Gehwegs, insbesondere eine Steinplatte auf die Auflagefläche gelegt werden kann. Hierbei kann die Auflagefläche durch das Leitungsführungselement oder durch ein auf dem Leitungsführungselement auflegbares Abdeckelement gebildet sein. Die Auflagefläche ist hierbei insbesondere parallel zu der Bodenfläche angeordnet und begrenzt das Leitungsführungsmodul in Bezug auf die Einbaulage oberseitig, wodurch in der Einbauphase das Leitungsführungsmodul nach dem Entfernen des Bodenbelags des Gehwegs direkt auf das Sand-/Kiesbett oder einen anderen vorhandenen Untergrund gelegt werden kann und der Bodenbelag, nachdem er auf der Auflagefläche angeordnet ist, höhen- und neigungsmäßig dieselbe Ausrichtung aufweist wie zuvor. Hierbei ist darauf zu achten, dass der Untergrund entsprechend der Höhe des Leitungsführungsmodul abgetragen wird, damit kein Höhenunterschied zu dem vorhandenen Bodenbelag entsteht.

Durch das Verlegen des Leitungsführungsmoduls unterhalb des Bodenbelags des Gehwegs ist es für Passanten nicht zu erkennen, wodurch eine hohe Sicherheit hinsichtlich eines unbefugten Zugriffs insbesondere hinsichtlich Diebstahls oder Vandalismus gegeben ist. Das Leitungsführungsmodul ist vorzugsweise aus Kunststoff hergestellt und dadurch relativ kostengünstig herstellbar. Zudem ist Kunststoff elektrisch isolierend, sodass ein Leitungsführungsmodul aus Kunststoff eine zusätzliche Isolation der Leitungen gewährleistet und somit hohe Sicherheitsstandards erfüllt. Dies ist insbesondere aufgrund der geringen Einbautiefe vorteilhaft, um zusätzlichen Schutz für Passanten zu bieten. Ferner wirkt Kunststoff thermisch isolierend, wodurch die Leitungen im Inneren des Leitungsführungsmoduls beispielsweise im Sommer vor hohen Temperaturen geschützt sind. Weiterhin ist vorteilhaft, dass das Leitungsführungsmodul durch das flächige Auflegen der Steinplatte nicht für punktuelle Lasten ausgelegt werden muss und dadurch relativ kostengünstig herstellbar ist.

Das Leitungsführungsmodul umfasst ferner mehrere Leitungsführungskanäle, die sich in einer parallel zur Bodenfläche angeordneten Leitungsführungsebene erstrecken und in denen die elektrischen Leitungen verlaufen. Die Leitungsführungskanäle weisen jeweils einen Leitungsführungskanalboden auf, der die Leitungsführungskanäle in Richtung der Bodenfläche begrenzt, sodass die elektrischen Leitungen in dem Leitungsführungskanal auf den Leitungsführungskanalboden gelegt werden können. Der Leitungsführungskanalboden weist hierzu in Bezug auf einen Querschnitt durch den Leitungsführungskanal vorzugsweise eine gewölbte Form, beispielsweise eine Halbschalenform auf. Das Leitungsführungsmodul weist ferner mehrere Seitenflächen auf, die das Leitungsführungselement in der Leitungsführungsebene begrenzen. Die Leitungsführungskanäle sind daher in Bezug auf die Einbaulage von oben zugänglich, sodass die elektrischen Leitungen relativ leicht in die Leitungsführungskanäle gelegt und bei Bedarf, beispielsweise zwecks Wartungsmaßnahmen wieder entnommen werden können. Ferner können die Austritte der Leitungsführungskanäle in den Seitenflächen Schutzabdeckungen aufweisen, die werksseitig hergestellt werden, wobei Schutzabdeckungen derart ausgebildet sind, dass sie mit relativ geringem Aufwand entfernt werden können. Beispielsweise können die Schtzabdeckungen lösbar an dem Leitungsführungselement befestigt sein oder einstückig mit dem Leitungsführungselement ausgebildet sein, wobei diese dann derart beschaffen sind, dass sie leicht herausgebrochen werden können.

Die Seitenflächen sind vorzugsweise rechtwinklig zur Leitungsführungsebene und somit rechtwinklig zur Bodenfläche angeordnet. Vorzugsweise weist das Kabelführungselement vier Seitenflächen auf, die zueinander parallel oder zueinander rechtwinklig angeordnet sind. Das Kabelführungselement ist daher vorzugsweise rechteckig oder quadratisch ausgebildet. Ferner sind die Seitenflächen vorzugsweise rechtwinklig zur Bodenfläche angeordnet, wodurch mehrere Leitungsführungsmodule relativ einfach angrenzend zueinander angeordnet werden können. Ferner ist jeder Leitungsführungskanal in der Leitungsführungsebene durch Leitungsführungskanalseitenwände begrenzt. Die Leitungsführungskanäle weisen in Bezug auf einen Querschnitt vorzugsweise ein U-Form auf, wobei der Übergang zwischen Leitungsführungskanalboden und Leitungsführungskanalwand einen Übergangsradius aufweist, der vorzugsweise derart dimensioniert ist, dass der Leitungsführungskanalboden einen halbkreisförmigen Querschnitt aufweist. Die Leitungsführungskanalseitenwände begrenzen den Leitungsführungskanal in der Leitungsebene und dienen als Führung für die elektrischen Leitungen, insbesondere für Kabel, die in dem Leitungsführungskanal verlegt sind. Jeder Leitungsführungskanal erstreckt sich zwischen mindestens zwei Seitenflächen, sodass eine Leitung von außen in den Leitungsführungskanal hinein und wieder herausgeführt werden kann.

In einer bevorzugten Ausgestaltung des erfindungsgemäßen Leitungsführungsmoduls sind zwischen den Leitungsführungskanälen mehrere in Bezug auf den Leitungsführungskanalboden hervorragende inselartige Plattformen gebildet. Die inselartigen Plattformen können gemeinsam die Auflagefläche bilden. Alternativ kann das Leitungsführungsmodul ein Abdeckelement, beispielsweise einen Deckel aufweisen, das auf den inselartigen Plattformen aufliegt, und das die Auflagefläche für den Bodenbelag des Gehwegs bildet. Die Leitungsführungskanäle sind hierzu beabstandet zueinander angeordnet, sodass zwischen den Leitungsführungskanalseitenwänden zweier benachbarter Leitungsführungskanäle jeweils mindestens eine inselartige Plattform gebildet ist. Die Leitungsführungskanäle verlaufen somit nutartig zwischen den inselartigen Plattformen. Besonders bevorzugt sind die Leitungsführungskanäle derart angeordnet, dass in Bezug auf die Auflagefläche sowohl im Randbereich des Leitungsführungsmoduls insbesondere in den Ecken des Leitungsführungsmoduls als auch im Zentrum des Leitungsführungsmoduls mindestens eine inselartige Plattform gebildet ist, sodass ein auf den inselartigen Plattformen angeordneter Bodenbelag oder ein Abdeckelement an mehreren Stellen auf dem Leitungsführungsmodul aufliegt und unterstützt wird.

Vorzugsweise umfasst das erfindungsgemäße Leitungsführungsmodul mindestens zwei parallel zueinander angeordnete Leitungsführungskanäle. Die beiden parallel zueinander angeordneten Leitungsführungskanäle erstrecken sich vorzugsweise linear durch das Leitungsführungsmodul hindurch von einer ersten Seitenfläche zu einer zweiten gegenüberliegenden Seitenfläche. Somit können mehrere linear verlaufende elektrische Leitungen parallel zueinander angeordnet werden. Diese Ausgestaltung eignet sich insbesondere dazu, zwei unabhängige elektrische Leitungen jeweils in einem separaten Leitungsführungskanal beabstandet zueinander beispielsweise zu zwei unterschiedlichen Ladevorrichtungen zu führen. Alternativ können beispielsweise in dem ersten Leitungsführungskanal die Stromleitungen und in dem anderen Leitungsführungskanal die Signalleitungen geführt werden.

In einer weiteren vorteilhaften Ausgestaltung der Erfindung kreuzen sich mindestens zwei Leitungsführungskanäle. Die Leitungsführungskanäle kreuzen sich vorzugsweise in einem Winkel von 90°, sodass eine elektrische Leitung, die in einer ersten Richtung in das Leitungsführungsmodul hinein geführt ist, beispielsweise in einem Winkel von 90° von dem einen Leitungsführungskanal in den anderen Leitungsführungskanal und somit in einer zweiten zu der ersten Richtung rechtwinklig angeordneten Richtung aus dem Leitungsführungsmodul heraus geführt werden kann. In der ersten Richtung kann die elektrische Leitung beispielsweise durch mehrere aneinander angrenzende Leitungsführungsmodule von dem Verteilerkasten in Richtung Straße geführt werden, wohingegen es in der zweiten Richtung beispielsweise durch mehrere in der zweiten Richtung aneinander angrenzende Leitungsführungsmodule parallel zur Straße entlang des Gehwegs geführt werden kann.

In einer besonders bevorzugten Ausgestaltung der Erfindung erstrecken sich mindestens zwei parallel zueinander angeordnete Leitungsführungskanäle in einer ersten Richtung in der Leitungsführungsebene, wohingegen sich mindestens zwei weitere zueinander parallel angeordnete Leitungsführungskanäle in einer zweiten Richtung in der Leitungsführungsebene erstrecken. Besonders bevorzugt sind die Leitungsführungskanäle der ersten Richtung hierbei rechtwinklig zu den Leitungsführungskanälen der zweiten Richtung angeordnet. Die Leitungsführungskanäle der ersten Richtung kreuzen zudem die Leitungskanäle der zweiten Richtung. Die Leitungsführungskanäle der ersten Richtung und die Leitungsführungskanäle der zweiten Richtung weisen hierbei einen identischen Abstand zueinander auf. Zudem ist der Abstand der Leitungsführungskanäle zu der jeweiligen benachbarten Seitenwand des Leitungsführungsmoduls identisch, wodurch sich insbesondere bei einem quadratisch ausgestalteten Leitungsführungsmodul ein symmetrischer Aufbau ergibt. Entsprechend den vorgenannten Ausführungen ist zwischen jeweils zwei benachbarten Leitungsführungskanälen eine inselartige Plattform gebildet, sodass bei dem vorgenannten Aufbau eine inselartige Plattform im Zentrum, jeweils eine inselartige Plattform in den Ecken und jeweils eine inselartige Plattform am Rand zwischen den eckseitigen inselartigen Plattformen ausgebildet ist, die alle beabstandet zueinander angeordnet und durch die Leitungsführungskanäle getrennt sind. Folglich können aus allen Richtungen Leitungen in das Leitungsführungsmodul hinein und heraus geführt werden, wobei innerhalb des Leitungsführungsmoduls die Verlegerichtung beispielsweise um 90° gewechselt werden kann.

In einer weiteren vorteilhaften Ausgestaltung der Erfindung weist das Leitungsführungsmodul ein separates Abdeckelement auf, das auf dem Leitungsführungselement aufliegt. Hierdurch können die Leitungsführungskanäle zusätzlich vor Beschädigungen oder Verschmutzungen geschützt werden. Das Abdeckelement deckt hierbei vorzugsweise das gesamte Leitungsführungselement ab und entspricht hinsichtlich seiner Form der Form der Grundfläche des Leitungsführungselements. Das aufgesetzte Abdeckelement bildet die Auflagefläche für den Bodenbelag des Gehwegs, wobei das Abdeckelement selbst nicht den Bodenbelag des Gehwegs bildet. Zusätzlich kann das Abdeckelement eine rutschhemmende Oberfläche aufweisen, beispielsweise in Form einer gummierten Beschichtung oder einer Strukturierung, die ein Verrutschen des aufgelegten Bodenbelags des Gehwegs insbesondere einer Gehwegplatte verhindert.

In einer hierzu weiterführenden Ausgestaltung des erfindungsgemäßen Leitungsführungsmoduls weist das Abdeckelement an der dem Leitungsführungselement zugewandten Seite mehrere Vorsprünge auf, die derart ausgebildet sind, dass diese formschlüssig in die Leitungsführungskanäle hineinragen und an den Leitungsführungskanalseitenwänden anliegen. Dementsprechend ist die Form und Anordnung der Vorsprünge korrespondierend zu der Form und Anordnung der Leitungsführungskanäle ausgebildet. Die Vorsprünge sind vorzugsweise einstückig, insbesondere monolithisch mit dem Abdeckelement ausgebildet. Jeder Vorsprung ist einem Leitungsführungskanal zugeordnet und erstreckt sich über die gesamte Länge des Leitungsführungskanals. Ferner kann der Vorsprung eine nutartige Vertiefung in der Strinfläche, die dem Leitungsführungskanal zugewandt ist, aufweisen, wobei die Vertiefung einen Teil des Leitungsführungskanals bildet. Die Vertiefung weist vorzugsweise einen halbkreisförmigen Querschnitt auf, sodass in Kombination mit einem Leitungsführungskanalboden mit einem halbkreisförmigen Querschnitt ein Leitungsführungskanal mit einem kreisrunden Querschnitt gebildet ist. Durch das formschlüssige Hineinragen der Vorsprünge in die Leitungsführungskanäle ist das Abdeckelement gegen Verschieben gesichert und dient als zusätzliche Versteifung des Leitungsführungsmoduls, um eine signifikante Verformung des Leitungsführungsmoduls bei schwerer Belastung des Gehwegs zu verhindern.

Vorzugsweise sind Positionierungsöffnungen in den inselartigen Plattformen ausgebildet. Ferner kann das Abdeckelement korrespondierende Vorsprünge aufweisen, die in die Positionierungsöffnungen einsteckbar sind, wodurch das aufgesetzte Abdeckelement gegen ein Verrutschen auf der Auflagefläche gesichert ist. Weiterhin können zusätzliche Befestigungsmittel vorgesehen sein, um das Abdeckelement an dem Leitungsführungselement zu befestigen.

Vorteilhafterweise weist das Leitungsführungsmodul in mindestens einem Leitungsführungskanalboden eine Wasserablauföffnung auf. Durch die Wasserablauföffnung kann in den Leitungsführungskanal eindringendes Wasser, beispielsweise Regenwasser in den Untergrund abfließen, sodass die Leitungsführungskanäle nicht mit Wasser volllaufen. Zudem ist so sichergestellt, dass das Regenwasser von dem Gehweg ins Erdreich abfließen kann. Vorzugsweise weist das Leitungsführungsmodul mehrere solcher Wasserablauföffnungen in verschiedenen Leitungsführungskanälen auf.

Eine erfindungsgemäße Leitungsführungsmodulanordnung weist mehrere erfindungsgemäße Leitungsführungsmodule auf, wobei die Leitungsführungskanäle mehrerer aneinandergrenzender Leitungsführungsmodule zu einem gemeinsamen Leitungsführungskanal zusammenschließbar sind. Die Leitungsführungsmodulanordnung weist dementsprechend mehrere identische Leitungsführungsmodule auf, sodass die Leitungsführungskanäle eines ersten Leitungsführungsmoduls mit den Leitungsführungskanälen eines zweiten angrenzenden Leitungsführungsmoduls zueinander fluchten. Folglich können elektrische Leitungen durch die aneinander angrenzenden Leitungsführungsmodule über größere Strecken, beispielsweise über die gesamte Breite des Gehwegs oder parallel zur Straße entlang des Gehwegs verlegt werden.

In einer hierzu weiterführenden Ausgestaltung der erfindungsgemäßen Leitungsführungsmodulanordnung sind die aneinander angrenzenden Leitungsführungsmodule mittels mindestens eines Verbindungselements verbindbar. Hierzu eignen sich insbesondere Steckverbinder, die in korrespondierende Öffnungen am Rand des Leitungsführungsmoduls, bzw. des Leitungsführungselements einsteckbar sind und beispielsweise über eine Schraubverbindung mit dem Leitungsführungsmodul oder mit einem weiteren Steckverbinder verbunden sind. Alternativ können die Steckverbinder reibschlüssig in den Öffnungen befestigt sein oder über eine Rasthakenverbindung gesichert sein. Die Öffnungen für die Steckverbinder können beispielsweise in der Auflagefläche und/oder in der Bodenfläche des Leitungsführungselements ausgebildet sein und sich entlang der Seitenflächen erstrecken, sodass die Öffnungen zweier aneinanderliegender Leitungsführungselemente eine Nut bilden, durch die sich der Steckverbinder erstreckt. Hierdurch ist der Steckverbinder in dem Leitungsführungsmodul versenkt und schließt vorzugsweise bündig mit der Auflagefläche und/oder der Bodenfläche ab. Ferner sind die Leitungsführungselemente derart ausgestaltet, dass mehrere Leitungsführungselemente übereinander gestapelt werden können, wodurch mehrere übereinanderliegende Leitungsführungsebenen gebildet sind, sodass eine Verlegung der elektrischen Leitungen übereinander möglich ist. Somit kann eine Vielzahl von Leitungen auf einer relativ kleinen Fläche verlegt werden. Zudem können Leistungs- und Kommunikationsleitungen getrennt voneinander geführt werden, um elektromagnetische Interferenzen in den Kommunikationsleitungen zu reduzieren.

Eine erfindungsgemäße Ladevorrichtungsanordnung umfasst eine Ladevorrichtung insbesondere zur Ladung einer Traktionsbatterie eines batterieelektrisch antreibbaren Fahrzeugs. Die Ladevorrichtung weist hierzu mindestens eine Ladeschnittstelle auf. Die Ladeschnittstelle ist beispielsweise als Ladebuchse ausgebildet, in die ein fahrzeugseitiger Ladestecker einsteckbar ist, wodurch eine elektrische Verbindung zwischen der Ladevorrichtung und der Traktionsbatterie herstellbar ist. Vorzugsweise ist die Ladevorrichtung eine Bordsteinladevorrichtung, die einen herkömmlichen Bordstein am straßenseitigen Rand eines Gehwegs ersetzt. Die Ladeschnittstelle ist in der Bordsteinladevorrichtung angeordnet, sodass ein am Straßenrand geparktes Fahrzeug auf relativ kurzem Weg mit der Ladeschnittstelle verbunden werden kann. Gleichwohl kann es sich bei der Ladevorrichtung um jede erdenkliche Art von Ladevorrichtung handeln, beispielsweise um eine allgemein bekannte Ladesäule, die auf dem Gehweg platziert wird.

Ferner umfasst die Ladevorrichtungsanordnung mindestens ein an die Ladevorrichtung angrenzendes erfindungsgemäßes Leitungsführungsmodul oder mindestens eine an die Ladevorrichtung angrenzende erfindungsgemäße Leitungsführungsmodulanordnung. Die elektrischen Leitungen zur Stromversorgung der Ladevorrichtung werden, von einem Stromverteilerkasten ausgehend, unterhalb des Bodenbelags des Gehwegs durch das Leitungsführungsmodul oder die Leitungsführungsmodulanordnung zur Ladevorrichtung geführt, sodass bei einer Installation einer solchen Ladevorrichtung keine aufwendigen Erdarbeiten notwendig sind, um die elektrischen Leitungen zu verlegen. Die Leitungsführungsmodule können beispielsweise quer unterhalb eines Gehwegs in einer Reihe von dem Stromverteilerkasten zu der Ladevorrichtung gelegt werden. Ferner können die Leitungsführungsmodule parallel zur Straße in einer Reihe verlegt werden. Zudem können die Leitungsführungsmodule in einer L-Form oder einer T-Form verlegt werden, um elektrische Leitungen beispielsweise von einem Stromverteilerkasten zu mehreren Ladevorrichtungen zu führen.

Ein Ausführungsbeispiel der vorliegenden Erfindung wird nachfolgend anhand der beigefügten Figuren beschrieben. Hierbei zeigt:
- Fig. 1: ein erfindungsgemäßes Leitungsführungsmodul in einer perspektivischen Ansicht,
- Fig. 2: das Leitungsführungsmodul der Fig. 1 in einer Schnittansicht,
- Fig. 3: eine erfindungsgemäße Leitungsführungsmodulanordnung mit mehreren Leitungsführungsmodulen der Fig. 1 in einer perspektivischen Ansicht,
- Fig. 4: eine Leitungsführungsmodulanordnung mit mehreren Leitungsführungsmodulen der Fig. 1 sowie einer Abdeckplatte und einer Gehwegplatte in einer perspektivischen Ansicht,
- Fig. 5: die Leitungsführungsmodulanordnung der Fig. 4 in einer Schnittansicht entlang der Mittelachse des Leitungsführungsmoduls,
- Fig. 6: die Abdeckplatte der Fig. 4 in einer perspektivischen Ansicht auf die Unterseite,
- Fig. 7: das Verbindungselement der Fig. 4 oder Fig. 5 in einer perspektivischen Ansicht, und
- Fig. 8: eine erfindungsgemäße Ladevorrichtungsanordnung mit einem angrenzenden Leitungsführungsmodul der Fig. 1 in einer Draufsicht.

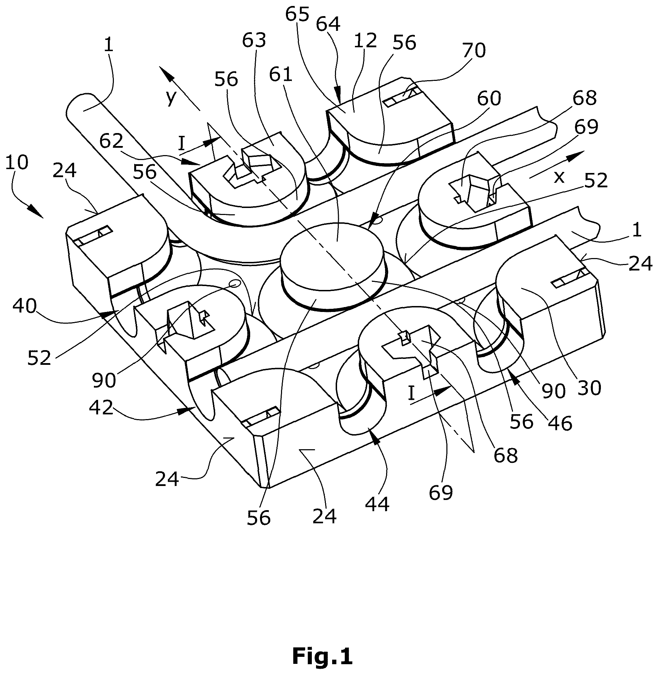

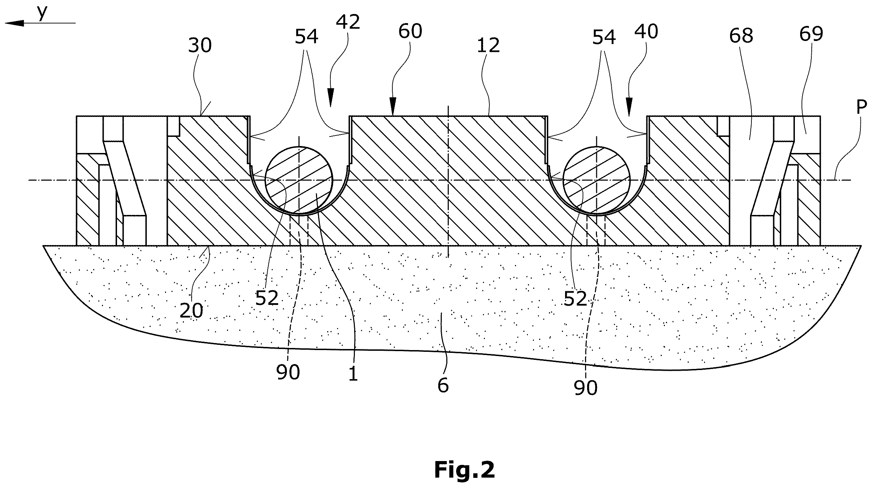

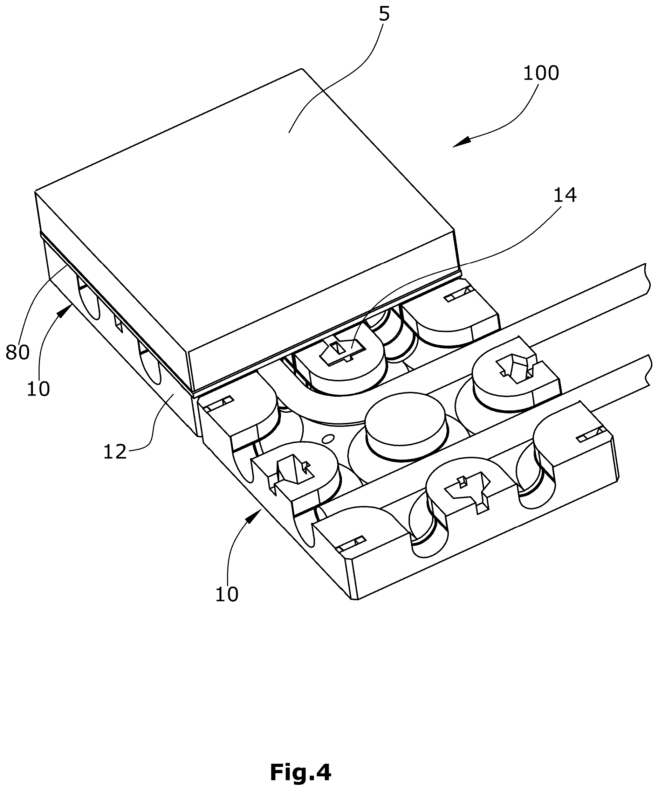

Fig. 1 zeigt ein erfindungsgemäßes Leitungsführungsmodul 10 zur Führung einer elektrischen Leitung 1 unterhalb eines Gehwegs 4. Das Leitungsführungsmodul 10 umfasst ein Leitungsführungselement 12, das monolithisch ausgebildet ist und aus einem Kunststoff hergestellt ist. Das Leitungsführungsmodul 10 umfasst eine quadratischen und ebene Bodenfläche 20, die in Bezug auf die Einbaulage unterseitig an dem Leitungsführungselement 12 ausgebildet ist, und die auf einem Untergrund 6 platzierbar ist, wie in Fig. 2 gezeigt ist. Das Leitungsführungsmodul 10 umfasst weiterhin eine Auflagefläche 30, die dazu ausgelegt ist, dass ein Bodenbelag 5 des Gehwegs 4 in Form einer Steinplatte darauf angeordnet werden kann, wie in Fig. 4 gezeigt ist.

Ferner weist das Leitungsführungsmodul 10 vier Seitenflächen 24 auf, die sich rechtwinklig zur Bodenfläche 20 von der Bodenfläche 20 zur Auflagefläche 30 erstrecken und das Leitungsführungsmodul 10 in einer Leitungsführungsebene P seitlich begrenzen.

Das Leitungsführungsmodul 10 weist vier lineare Leitungsführungskanäle 40, 42, 44, 46 in dem Leitungsführungselement 12 auf, die sich in der parallel zur Bodenfläche 20 angeordneten Leitungsführungsebene P erstrecken, wie in Fig. 2 gezeigt ist. Hierbei erstrecken sich zwei Leitungsführungskanäle 40, 42 parallel zueinander in einer ersten Richtung x zwischen zwei sich gegenüberliegenden Seitenflächen 24 und zwei weitere zueinander parallele Leitungsführungskanäle 44, 46 in einer zweiten Richtung y zwischen zwei weiteren sich gegenüberliegenden Seitenflächen 24, wobei die erste Richtung x rechtwinklig zur zweiten Richtung y angeordnet ist. Somit sind die Leitungsführungskanäle 40, 42 rechtwinklig zu den Leitungsführungskanälen 44, 46 angeordnet.

Die Leitungsführungskanäle 40, 42 der ersten Richtung x kreuzen die Leitungsführungskanäle 44, 46 der zweiten Richtung y an insgesamt vier Stellen. Zudem entspricht der Abstand zwischen den Leitungsführungskanälen 40, 42 der ersten Richtung x dem Abstand zwischen den Leitungsführungskanälen 44, 46 der zweiten Richtung y, wobei die Leitungsführungskanäle 40, 42, 44, 46 beider Richtungen x, y jeweils symmetrisch zu einer Mittelachse des Leitungsführungselements 12 angeordnet sind und somit jeweils den gleichen Abstand zum jeweils benachbarten Rand des Leitungsführungsmoduls 10 aufweisen.

Jeder Leitungsführungskanal 40, 42, 44, 46 weist einen gewölbten Leitungsführungskanalboden 52 auf, der den jeweiligen Leitungsführungskanal 40, 42, 44, 46 in Richtung der Bodenfläche 20 begrenzt. Ferner weist jeder Leitungsführungskanal 40, 42, 44, 46 zwei Leitungsführungskanalseitenwände 54 auf, die die Leitungsführungskanäle 40, 42, 44, 46 in der Leitungsführungsebene P jeweils begrenzen. Jeder Leitungsführungskanal 40, 42, 44, 46 weist somit im Querschnitt eine U-Form auf, wie in Fig. 2 gut zu erkennen ist. Die gewölbte Form der Leitungsführungskanalböden 52 mit einem halbkreisförmigen Querschnitt sorgt hierbei dafür, dass die elektrischen Leitungen 1 mittig in dem jeweiligen Leitungsführungskanal 40, 42, 44, 46 liegen. Ferner werden Kerbwirkungen an den Übergängen vermieden, die bei hoher Belastung zu Rissbildung führen könnten.

Zwischen und benachbart zu den Leitungsführungskanälen 40, 42, 44, 46 ragen insgesamt neun inselartige Plattformen 60, 62, 64 hervor, deren Plattformflächen 61, 63, 65 parallel zur Bodenfläche 20 ausgerichtet sind und gemeinsam die Auflagefläche 30 bilden. Dazu zählen: eine Zentral-Plattform 60 im Zentrum, vier Eck-Plattformen 64 in den Ecken und vier Rand-Plattformen 62 die jeweils zwischen zwei Eck-Plattformen 64 angeordnet sind. Hierbei grenzen die jeweiligen Plattformflächen 61, 63, 65 der inselartigen Plattformen 60, 62, 64 an die jeweiligen Leitungsführungskanalseitenwände 54 an und sind rechtwinklig zu diesen angeordnet.

Zudem ist an dem Übergang zwischen zwei Leitungsführungskanalseitenwänden 54 zweier sich kreuzender Leitungsführungskanäle 40, 42, 44, 46 eine abgerundete Übergangsfläche 56 gebildet, sodass bei einem Richtungswechsel der elektrischen Leitung 1 innerhalb des Leitungsführungsmoduls 10 die Leitung 1 nicht geknickt wird, sondern diese sich an die Übergangsfläche 56 anlegt, wobei die Dimensionierung der Übergangsflächen 56 durch die einzuhaltenden Biegeradien der Leitung 1 vorgegeben sind. Die Übergangsflächen 56 sind bezüglich ihres Rundungsradius derart groß ausgestaltet, dass die Zentral-Plattform 60 im Zentrum des Leitungsführungsmoduls 10 eine kreisrunde Querschnittsfläche aufweist. Demzufolge entspricht der Rundungsradius ca. der Hälfte des Abstandes zwischen zwei an eine gemeinsame inselartige Plattform 60, 62, 64 angrenzenden Leitungsführungskanalseitenwänden 54 zweier benachbarter paralleler Leitungsführungskanäle 40, 42, 44, 46.

Jede Rand-Plattform 62 weist eine Verbindungsöffnung 68 auf, die sich ausgehend von der jeweiligen Rand-Plattform 62 in Richtung Bodenfläche erstreckt und eine schwalbenschwanzartige Form aufweist. Ausgehend von der jeweiligen Verbindungsöffnung 68 erstreckt sich jeweils eine rechteckige Nut 69 bis zur jeweiligen benachbarten Seitenfläche 24.

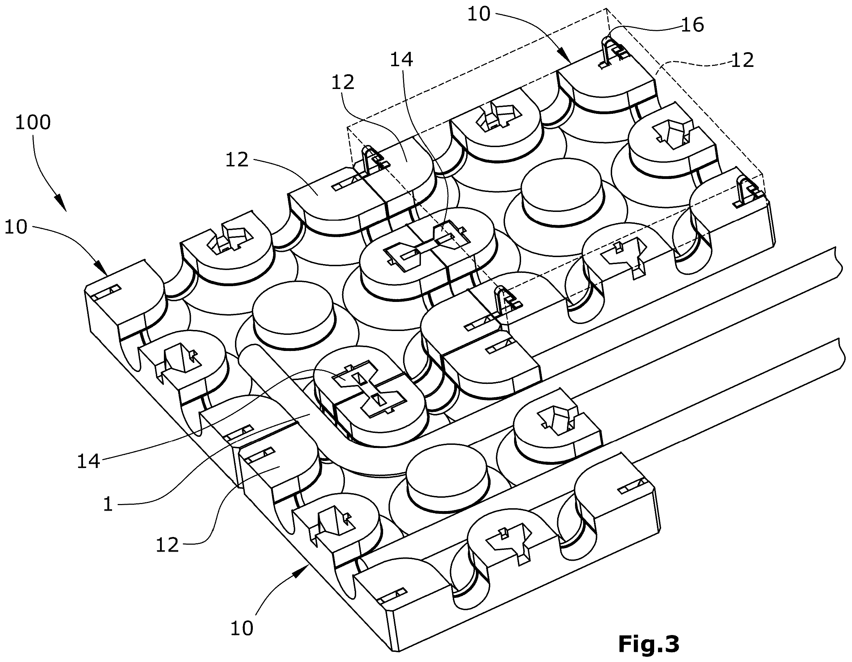

Das Leitungsführungselement 12 weist zudem vier rechteckige Positionierungsöffnungen 70 auf, die jeweils in den Eck-Plattformen 64 angeordnet sind und sich in Richtung der Bodenfläche erstrecken. Die Positionierungsöffnungen 70 sind derart ausgestaltet, dass darin Verbindungsklammern 16 eingesetzt werden können, um bei einem Aufeinanderstapeln mehrerer Leitungsführungsmodule 10 die beiden übereinanderliegenden Leitungsführungsmodule 10 mittels einer Rastverbindung miteinander zu verbinden. Die Verbindungsklammern 16 sind in Fig. 3 dargestellt.

Weiterhin weist das Leitungsführungselement 12 mehrere Wasserablauföffnungen 90 auf, die sich durch den Leitungsführungskanalboden 52 zur Bodenfläche erstrecken, sodass in das Leitungsführungselement 12 eindringendes Wasser in das Erdreich ablaufen kann.

Fig. 3 zeigt eine erfindungsgemäße Leitungsführungsmodulanordnung 100 mit mehreren Leitungsführungsmodulen 10, die angrenzend zueinander platziert sind, wobei zwei benachbarte Leitungsführungsmodule 10 durch ein klammerartiges Verbindungselement 14 miteinander verbunden sind. Das Verbindungselement 14 greift hierzu in die jeweilige Verbindungöffnung 68 ein, wobei die beiden Verbindungsöffnungen 68 der aneinander angrenzenden Rand-Plattformen 62 zweier benachbarter Leitungsführungsmodule 10 aufgrund ihrer mittigen Anordnung in der Rand-Plattform 62 derart benachbart zueinander angeordnet sind, dass die beiden Nuten 69 zueinander fluchten. Die Leitungsführungskanäle 40, 42, 44, 46 der jeweils aneinandergrenzenden Leitungsführungselemente 12 können hierdurch zu einem gemeinsamen Leitungsführungskanal zusammengeschlossen werden, sodass eine elektrische Leitung 1 von einem ersten Leitungsführungselement 12 in ein angrenzendes zweites Leitungsführungselement 12 geführt werden kann.

Fig. 4 zeigt eine erfindungsgemäße Leitungsführungsmodulanordnung 100. Beispielhaft ist in dieser Leitungsführungsmodulanordnung 100 ein plattenförmiges Abdeckelement 80 dargestellt, das auf dem Leitungsführungselement 12 angeordnet werden kann, um die Leitungsführungskanäle 40, 42, 44, 46 oberseitig zu verschließen. Hierzu liegt das Abdeckelement 80 auf den inselartigen Plattformen 60, 62, 64 auf.

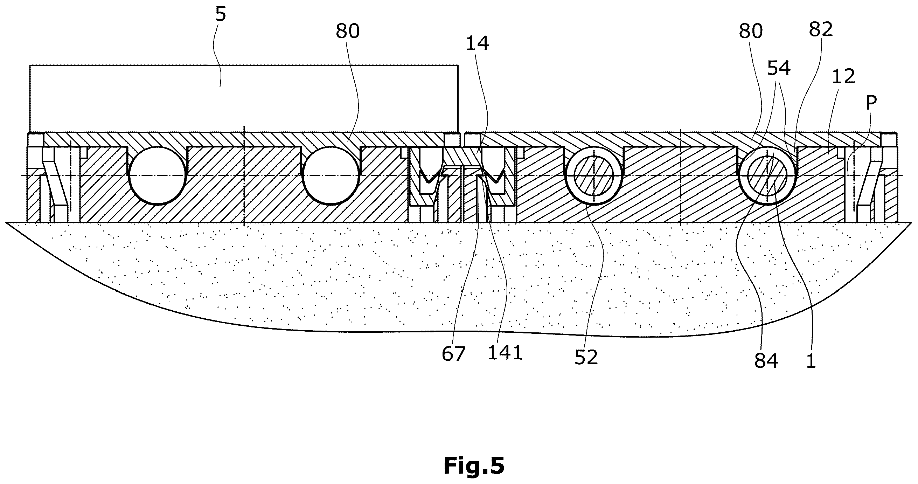

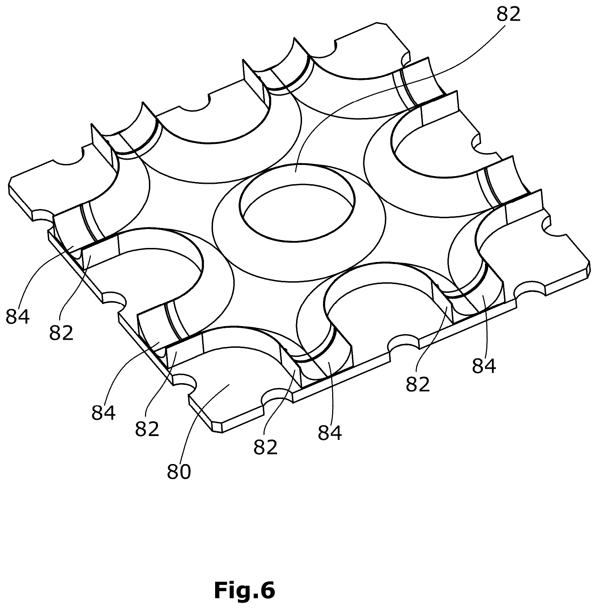

Wie in Fig. 5 und Fig. 6 gezeigt ist, weist das Abdeckelement 80 nach unten ragende Vorsprünge 82 auf die jeweils formschlüssig in die Leitungsführungskanäle 40, 42, 44, 46 hineinragen und die an den Leitungsführungskanalseitenwänden 54 anliegen, um die Abdeckplatte 80 gegen Verschieben zu sichern. Zudem dient der Formschluss der Versteifung des Leitungsführungsmoduls 10. Die Vorsprünge 82 weisen jeweils eine nutartige Vertiefung 84 auf, die einen halbkreisförmigen Querschnitt aufweist, sodass jede Vertiefung 84 zusammen mit dem ihr zugeordneten Leitungsführungskanalboden 52 einen Leitungsführungskanal 40, 42, 44, 46 mit einem kreisförmigen Querschnitt bildet, wie in Fig. 5 gezeigt ist. Auf die Abdeckplatte 80 wird dann der Bodenbelag 5 des Gehwegs 4 gelegt, der hier in Form einer Steinplatte dargestellt ist.

Das in Fig. 4 gezeigte Abdeckelement 80 weist im Gegensatz zu dem in Fig. 5 und Fig. 6 gezeigten Abdeckelement 80 keine Vorsprünge 82 auf, kann jedoch alternativ auch Vorsprünge 82 aufweisen.

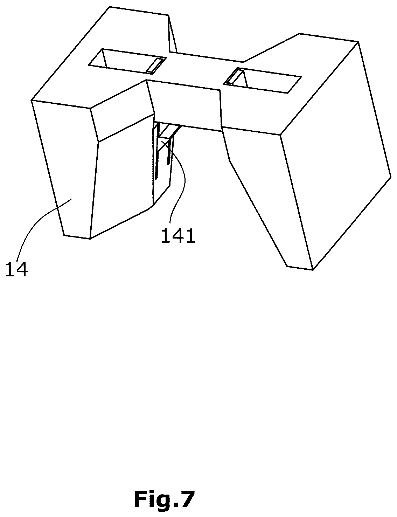

Fig. 7 zeigt das Verbindungselement 14, das zwei aneinander angrenzende Leitungsführungsmodule 10 miteinander verbindet, im Detail. Das Verbindungelement 14 weist zwei Rasthaken 141 auf, die in korrespondierende hinterschnittene Ausnehmungen 67 in den Verbindungsöffnungen 68 eingreifen und das Verbindungselement 14 in den Verbindungsöffnungen 68 sichern, wie in Fig. 5 gezeigt ist. Hierbei ist das Verbindungselement 14 vollständig in dem Leitungsführungselement 12 versenkt.

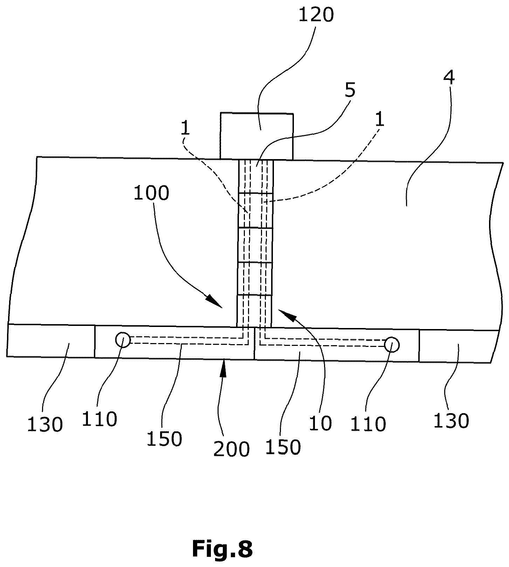

Fig. 8 zeigt eine Ladevorrichtungsanordnung 200 mit mehreren Leitungsführungsmodulen 10 die in einer Reihe angeordnet sind. Die Leitungsführungsmodule 10 verlaufen quer unterhalb eines Gehwegs 4 wobei die Leitungsführungsmodule 10 durch einen aus Steinplatten gebildeten Bodenbelag 5 abgedeckt sind, ähnlich wie in Fig.4 gezeigt ist. Die Ladevorrichtungsanordnung 200 weist zudem eine Ladevorrichtung 150 auf, die als sogenannte BordsteinLadevorrichtung ausgebildet ist und einen herkömmlichen Bordstein 130 am straßenseitigen Rand des Gehwegs 4 ersetzt. Die Ladevorrichtung 150 weist eine Ladeschnittstelle 110 auf, die als Ladebuchse ausgebildet ist und in die ein fahrzeugseitiges Ladekabel eingesteckt werden kann. Am gegenüberliegenden Rand des Gehwegs 4 ist ein Stromverteilerkasten 120 angeordnet, der mit dem örtlichen Stromnetz verbunden ist. Die Leitungsführungsmodule 10 sind aneinander angrenzend zwischen der Ladevorrichtung 150 und dem Stromverteilerkasten 120 angeordnet, wobei diese jeweils an die Ladevorrichtung 150 und an den Stromverteilerkasten 120 angrenzen. Durch die Leitungsführungsmodule 10 sind elektrische Leitungen 1 verlegt, die die Ladevorrichtung 150 mit Strom aus dem Stromverteilerkasten 120 versorgen. Im vorliegenden Beispiel verlaufen mehrere elektrische Leitungen 1 unterschiedlicher Ladevorrichtungen 150 durch dieselben Leitungsführungsmodule 10. Alternativ kann jede Ladevorrichtungsanordnung 200 separate Leitungsführungsmodule 10 aufweisen.

## Patentansprüche

1. Leitungsführungsmodul (10) zur Führung einer elektrischen Leitung (1) unterhalb eines Gehwegs (4), umfassend:
eine Auflagefläche (30), die dazu ausgelegt ist, dass ein Bodenbelag (5) des Gehwegs (4) darauf angeordnet werden kann,
ein Leitungsführungselement (12) mit einer Bodenfläche (20), mittels der das Leitungsführungselement (12) auf einem Untergrund (6) platzierbar ist,
mehreren Leitungsführungskanälen (40, 42, 44, 46) in dem Leitungsführungselement (12), die sich in einer parallel zur Bodenfläche (20) angeordneten Leitungsführungsebene (P) erstrecken und die in Richtung der Bodenfläche (20) durch jeweils einen Leitungsführungskanalboden (52) begrenzt sind,
mehreren Seitenflächen (24), die das Leitungsführungselement (12) in der Leitungsführungsebene (P) begrenzen, wobei jeder Leitungsführungskanal (40, 42, 44, 46) in der Leitungsführungsebene (P) durch Leitungsführungskanalseitenwände (54) begrenzt ist und sich zwischen mindestens zwei Seitenflächen (24) erstreckt.

2. Leitungsführungsmodul (10) gemäß Anspruch 1, wobei zwischen den Leitungsführungskanälen (40, 42, 44, 46) mehrere in Bezug auf den Leitungsführungskanalboden (52) hervorragende inselartige Plattformen (60, 62, 64) gebildet sind.

3. Leitungsführungsmodul (10) gemäß einem der vorhergehenden Ansprüche, mit mindestens zwei parallel zueinander angeordneten Leitungsführungskanälen (40, 42, 44, 46).

4. Leitungsführungsmodul (10) gemäß einem der vorhergehenden Ansprüche, wobei sich mindestens zwei Leitungsführungskanäle (40, 42, 44, 46) kreuzen.

5. Leitungsführungsmodul (10) gemäß einem der vorhergehenden Ansprüche, wobei sich mindestens zwei parallel zueinander angeordnete Leitungsführungskanäle (40, 42) in einer ersten Richtung (x) in der Leitungsführungsebene (P) erstrecken und sich mindestens zwei weitere zueinander parallel angeordnete Leitungsführungskanäle (44, 46) in einer zweiten Richtung (y) in der Leitungsführungsebene (P) erstrecken.

6. Leitungsführungsmodul gemäß Anspruch 5, wobei die Leitungsführungskanäle (40, 42) der ersten Richtung (x) rechtwinklig zu den Leitungsführungskanälen (44, 46) der zweiten Richtung (y) angeordnet sind.

7. Leitungsführungsmodul (10) gemäß einem der vorhergehenden Ansprüche, wobei die Seitenflächen (24) rechtwinklig zur Bodenfläche (20) angeordnet sind.

8. Leitungsführungsmodul (10) gemäß einem der vorhergehenden Ansprüche, wobei die Leitungsführungskanalseitenwände (54) rechtwinklig zur Bodenfläche (20) angeordnet sind.

9. Leitungsführungsmodul (10) gemäß einem der vorhergehenden Ansprüche, wobei das Leitungsführungsmodul (10) ein separates Abdeckelement (80) aufweist, das auf dem Leitungsführungselement (12) aufliegt.

10. Leitungsführungsmodul gemäß Anspruch 9, wobei das Abdeckelement (80) an der dem Leitungsführungselement (12) zugewandten Seite mehrere Vorsprünge (82) aufweist, die derart ausgebildet sind, dass diese formschlüssig in die Leitungsführungskanäle (40, 42, 44, 46) hineinragen und an den Leitungsführungskanalseitenwänden (54) anliegen.

11. Leitungsführungsmodul (10) gemäß einem der Ansprüche 2-10, wobei Positionierungsöffnungen (70) in den inselartigen Plattformen (60) ausgebildet sind.

12. Leitungsführungsmodul (10) gemäß einem der vorhergehenden Ansprüche, wobei das Leitungsführungsmodul (10) in mindestens einem Leitungsführungskanalboden (52) eine Wasserablauföffnung (90) aufweist.

13. Leitungsführungsmodulanordnung (100) mit mehreren Leitungsführungsmodulen (10) gemäß einem der vorhergehenden Ansprüche, wobei die Leitungsführungskanäle (40, 42, 44, 46) mehrerer aneinandergrenzender Leitungsführungsmodule (10) zu einem gemeinsamen Leitungsführungskanal zusammenschließbar sind.

14. Leitungsführungsmodulanordnung (100) gemäß Anspruch 13, wobei aneinander angrenzende Leitungsführungsmodule (10) mittels mindestens eines Verbindungselements (14) verbindbar sind.

15. Ladevorrichtungsanordnung (200), mit
einer Ladevorrichtung (150) aufweisend mindestens eine Ladeschnittstelle (110), und
mindestens einem an die Ladevorrichtung (150) angrenzenden Leitungsführungsmodul (10) gemäß einem der Ansprüche 1-12, oder mindestens einer an die Ladevorrichtung (150) angrenzenden Leitungsführungsmodulanordnung (100) gemäß Anspruch 13 oder 14.
